# EUROPEAN PATENT SPECIFICATION

(11) **EP 3 099 017 B1**
(45) Date of publication and mention of the grant of the patent: **09.05.2018**
(21) Application number: 16159590.5
(22) Date of filing: 10.03.2016
(51) Int. Cl.: G05B 15/02, G05F 1/66, H04L 12/28

(54) **A METHOD AND A DEVICE FOR CONTROLLING A SMART HOME POWER SUPPLY**
VERFAHREN UND VORRICHTUNG ZUR STEUERUNG EINER SMART-HOME-STROMVERSORGUNG
PROCÉDÉ ET DISPOSITIF POUR COMMANDER UNE ALIMENTATION ÉLECTRIQUE DOMESTIQUE INTELLIGENTE

(30) Priority: 27.05.2015 CN 201510280550
(43) Date of publication of application: 30.11.2016
(73) Proprietor: Xiaomi Inc., Beijing 100085 (CN)
(72) Inventor: FAN, Jie, Beijing Beijing 100085 (CN); LIU, Shanrong, Beijing Beijing 100085 (CN); SUN, Wei, Beijing Beijing 100085 (CN)
(74) Representative: Sackin, Robert

(56) References cited:
- WO-A1-2014/117861
- US-A1- 2012 331 156
- US-A1- 2013 261 821

## Description

### TECHNICAL FIELD

The present disclosure generally relates to the field of smart homes, and more particularly, to a method and a device for controlling a smart home power supply.

### BACKGROUND

With development of science and technologies, the conception of smart home has deeply gone into our social life. The smart home utilizes advanced technologies such as computer sciences, networks and communications, automatic control, and the like to incorporate various application subsystems relating to home life, and makes our home life more comfortable, more safe, more efficient and more energy-saving by integrated managements. As compared with an ordinary home, the smart home not only has conventional residential function but also provides a live space which is comfortable, safe, efficient, energy-saving and of more humanity and thereby is capable of optimizing people's life styles.

At present, corresponding products for a smart home have come out, such as smart TVs, smart refrigerators, smart air conditioners, and the like. The smart products in a smart home may greatly meet users' requirements and facilitate operations to make life become more varied and wonderful.

International application with publication number WO 2014/117861 discloses a system for managing house appliances supplied through a power grid. A control unit collects power consumption data of house appliances and generate a time schedule for devices such that at any time, the total power consumption of the house appliances is kept under a maximum threshold.

US patent with publication number US 2012/331156 discloses methods, systems and apparatus for controlling wireless target devices, for example house appliances, or power circuits providing power to such devices. A user can configure a smart device to communicate and control the target devices.

US patent with publication number US 2013/261821 discloses a power distribution system and method for implementing Internet based access to a hybrid home automation network. The system uses a smart gateway power controller configured to selectively switch an AC power source connected to a device. The configurations may be nested within a home automation network to permit separation of control for load devices within a common home automation environment.

### SUMMARY

In view of the above, the present disclosure provides a method and a device for controlling a smart home power supply to realize a smart control on a plurality of smart home power supplies to greatly facilitate user's operations and usage.

According to a first aspect of embodiments of the present disclosure, there is provided a method for controlling a smart home power supply. The method includes:
after successful automatic matching of a smart router with a plurality of smart home power supplies, obtaining addresses assigned for the smart home power supplies by the smart router, and obtaining information on a plurality of home electronics connected to the smart home power supplies;
establishing a correspondence between the information on the home electronics and the addresses of the smart home power supplies; and
obtaining control information set for a home electronic by a user, searching an address of a smart home power supply connected to the home electronic from the correspondence, and sending a control instruction to the smart router according to the control information and the address of the smart home power supply to control the smart home power supply to perform a corresponding operation.

The sending of a control instruction to the smart router according to the control information and the address of the smart home power supply to control the smart home power supply to perform a corresponding operation, includes:
when the control information is turning on the smart home power supply, sending a control instruction carrying the address of the smart home power supply to the smart router to control the smart home power supply to perform a turning-on operation; or
when the control information is turning off the smart home power supply, sending a control instruction carrying the address of the smart home power supply to the smart router to control the smart home power supply to perform a turning-off operation.

When the control information is turning on the smart home power supply, the sending of a control instruction carrying the address of the smart home power supply to the smart router to control the smart home power supply to perform a turning-on operation, includes:
when the control information is turning on the smart home power supply and includes a starting time, sending a control instruction carrying the address of the smart home power supply and the starting time to the smart router to control the smart home power supply to perform a turning-on operation at the starting time.

When the control information is turning on the smart home power supply and includes a starting time, the sending of a control instruction carrying the address of the smart home power supply and the starting time to the smart router to control the smart home power supply to perform a turning-on operation at the starting time, includes:
when the control information is turning on the smart home power supply and includes the starting time and a lasting time, sending a control instruction carrying the address of the smart home power supply, the starting time and the lasting time to the smart router to control the smart home power supply to perform a turning-on operation at the starting time and to perform a turning-off operation when a turning-on duration reaches the lasting time.

The method further includes:
obtaining information on usage habits set for the home electronics by the user;
when the information on usage habits indicates that a home electronic is not frequently used, detecting on a regular interval whether a turning-on duration of a smart home power supply connected to the home electronic exceeds a preset threshold; and
if the turning-on duration exceeds the threshold, sending a control instruction to the smart router to control the smart home power supply to perform a turning-off operation.

The obtaining of control information set for a home electronic by a user includes:
providing the information on the home electronics to the user, and receiving control information set for a home electronic by the user; or
analyzing the information on the home electronics to generate the control information.

The information on the home electronics includes identification information of the home electronics, or includes both the identification information and property information of the home electronics, wherein the property information is displayed when being viewed by the user.

According to a second aspect of embodiments of the present disclosure, there is provided a device for controlling a smart home power supply. The device includes:
an obtaining module configured to, after successful automatic matching of a smart router with a plurality of smart home power supplies, obtain addresses assigned for the smart home power supplies by the smart router, and obtain information on a plurality of home electronics connected to the smart home power supplies;
an establishing module configured to establish a correspondence between the information on the home electronics and the addresses of the smart home power supplies; and
a control module configured to obtain control information set for a home electronic by a user, search an address of a smart home power supply connected to the home electronic from the correspondence, and send a control instruction to the smart router according to the control information and the address of the smart home power supply to control the smart home power supply to perform a corresponding operation.

The control module includes:
a searching submodule configured to obtain control information set for a home electronic by a user and search an address of a smart home power supply connected to the home electronic from the correspondence; and
a control submodule configured to, when the control information is turning on the smart home power supply, send a control instruction carrying the address of the smart home power supply to the smart router to control the smart home power supply to perform a turning-on operation; or when the control information is turning off the smart home power supply, send a control instruction carrying the address of the smart home power supply to the smart router to control the smart home power supply to perform a turning-off operation.

The control submodule is configured to:
when the control information is turning on the smart home power supply and includes a starting time, send a control instruction carrying the address of the smart home power supply and the starting time to the smart router to control the smart home power supply to perform a turning-on operation at the starting time.

The control submodule is configured to:
when the control information is turning on the smart home power supply and includes the starting time and a lasting time, send a control instruction carrying the address of the smart home power supply, the starting time and the lasting time to the smart router to control the smart home power supply to perform a turning-on operation at the starting time and to perform a turning-off operation when a turning-on duration reaches the lasting time.

The obtaining module is further configured to obtain information on usage habits set for the home electronics by the user; and
the device further includes:
a monitoring module configured to, when the information on usage habits indicates that a home electronic is not frequently used, detect on a regular interval whether a turning-on duration of a smart home power supply connected to the home electronic exceeds a preset threshold; and if the turning-on duration exceeds the threshold, send a control instruction to the smart router to control the smart home power supply to perform a turning-off operation.

The control module is configured to:
provide the information on the home electronics to the user, and receive control information set for a home electronic by the user; or
analyze the information on the home electronics to generate the control information.

The information on the home electronics includes identification information of the home electronics, or includes both the identification information and property information of the home electronics, wherein the property information is displayed when being viewed by the user.

According to a third aspect of embodiments of the present disclosure, there is provided a device for controlling a smart home power supply. The device includes:
a processor; and
a memory for storing instructions executable by the processor;
wherein the processor is configured to perform:
after successful automatic matching of a smart router with a plurality of smart home power supplies, obtaining addresses assigned for the smart home power supplies by the smart router, and obtaining information on a plurality of home electronics connected to the smart home power supplies;
establishing a correspondence between the information on the home electronics and the addresses of the smart home power supplies; and
obtaining control information set for a home electronic by a user, searching an address of a smart home power supply connected to the home electronic from the correspondence, and sending a control instruction to the smart router according to the control information and the address of the smart home power supply to control the smart home power supply to perform a corresponding operation.

According to a fourth aspect of embodiments of the present disclosure, there is provided a computer program, which when executing on a processor of a device, performs any of the above methods

The technical solutions provided by embodiments of the present disclosure may have the following advantageous effects:

After successful automatic matching of a smart router with a plurality of smart home power supplies, addresses assigned for the smart home power supplies by the smart router are obtained, and information on a plurality of home electronics connected to the smart home power supplies are obtained. A correspondence between the information on the home electronics and the addresses of the smart home power supplies is established. Control information set for a home electronic device by a user is obtained, an address of a smart home power supply connected to the home electronic device is searched from the correspondence, and a control instruction is sent to the smart router according to the control information and the address of the smart home power supply to control the smart home power supply to perform a corresponding operation. Thus, a smart control on the smart home power supplies is realized to greatly facilitate user's operations and usage. Consequently, purposes such as energy-saving, safety and convenience to life are achieved and optimized usage and management of home electronics are realized.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the present invention.
Fig. 1 is a flowchart showing a method for controlling a smart home power supply according to an exemplary embodiment.
Fig. 2 is a diagram schematically showing a scenario for controlling smart home power supplies according to another exemplary embodiment.
Fig. 3 is a flowchart showing a method for controlling a smart home power supply according to another exemplary embodiment.
Fig. 4 is a flowchart showing a method for controlling a smart home power supply according to another exemplary embodiment.
Fig. 5 is a block diagram showing a device for controlling a smart home power supply according to another exemplary embodiment.
Fig. 6 is a block diagram showing a device for controlling a smart home power supply according to another exemplary embodiment.
Fig. 7 is a block diagram showing a device for controlling a smart home power supply according to another exemplary embodiment.
Fig. 8 is a block diagram showing a device for controlling a smart home power supply according to another exemplary embodiment.
Fig. 9 is a block diagram showing a device for controlling a smart home power supply according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

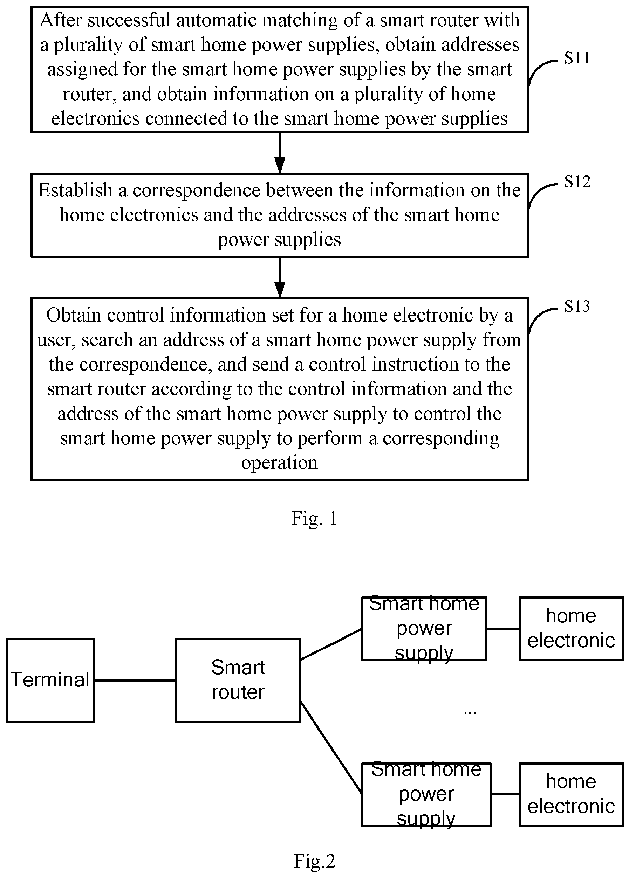

Fig. 1 is a flowchart showing a method for controlling a smart home power supply according to an exemplary embodiment. As shown in Fig. 1, the method is applied in a terminal and includes the following steps.

In step S11, after successful automatic matching of a smart router with a plurality of smart home power supplies, addresses assigned for the smart home power supplies by the smart router are obtained, and information on a plurality of home electronics or home electronic devices connected to the smart home power supplies is obtained.

In step S12, a correspondence between the information on the home electronics or electronic devices and the addresses of the smart home power supplies is established.

In step S13, control information set for a home electronic or electronic device by a user is obtained, an address of a smart home power supply connected to the home electronic or electronic device is searched from the correspondence, and a control instruction is sent to the smart router according to the control information and the address of the smart home power supply to control the smart home power supply to perform a corresponding operation.

Referring to Fig. 2, the above method may be applied in the application scenario as shown in Fig. 2. A terminal is connected with a smart router, and the smart router may be connected with a plurality of smart home power supplies, each of which is connected to a home electronic or electronic device. The smart router may automatically match the smart home power supplies to establish a connection, and the terminal may be connected with the smart router via subnetworks such as WiFi. The states of respective smart home power supplies may be uploaded to the smart router which may send the received state information to the terminal for display. The terminal may obtain information on the smart home power supplies and the home electronics or electronic devices via the smart router, and control the smart home power supplies to perform operations by sending a control instruction to the smart router, and thereby control use states of corresponding home electronics or electronic devices. Consequently, a user's purpose for remotely controlling the home electronics by a terminal may be achieved.

In the present embodiment, optionally, the connection between the smart router and the smart home power supplies is a wireless connection including but not limited to Bluetooth, infrared, WiFi, and the like. After successful automatic matching between the smart router and the smart home power supplies, the smart router automatically assigns an address to each of the smart home power supplies. The address is unique and thus may uniquely identify one smart home power supply, and consequently it is guaranteed that the address may distinguish all the smart power supplies in a home.

In the present embodiment, optionally, the sending of a control instruction to the smart router according to the control information and the address of the smart home power supply to control the smart home power supply to perform a corresponding operation, includes:
when the control information is turning on the smart home power supply, sending a control instruction carrying the address of the smart home power supply to the smart router to control the smart home power supply to perform a turning-on operation; or
when the control information is turning off the smart home power supply, sending a control instruction carrying the address of the smart home power supply to the smart router to control the smart home power supply to perform a turning-off operation.

In the present embodiment, optionally, on and off of a smart home power supply may be controlled by sending a high level or a low level. For example, when a high level is output, a smart home power supply is turned on so that it is guaranteed that a home electronic is powered up. When a low level is output, the smart home power supply is turned off so that it is guaranteed that the home electronic is powered down.

In the present embodiment, optionally, when the control information is turning on the smart home power supply, the sending of a control instruction carrying the address of the smart home power supply to the smart router to control the smart home power supply to perform a turning-on operation, includes:
when the control information is turning on the smart home power supply and includes a starting time, sending a control instruction carrying the address of the smart home power supply and the starting time to the smart router to control the smart home power supply to perform a turning-on operation at the starting time.

In the present embodiment, optionally, when the control information is turning on the smart home power supply and includes a starting time, the sending of a control instruction carrying the address of the smart home power supply and the starting time to the smart router to control the smart home power supply to perform a turning-on operation at the starting time, includes:
when the control information is turning on the smart home power supply and includes the starting time and a lasting time, sending a control instruction carrying the address of the smart home power supply, the starting time and the lasting time to the smart router to control the smart home power supply to perform a turning-on operation at the starting time and to perform a turning-off operation when a turning-on duration reaches the lasting time.

In the present embodiment, optionally, the above method may further include:
obtaining information on usage habits set for the home electronics by the user;
when the information on usage habits indicates that a home electronic is not frequently used, detecting on a regular interval whether a turning-on duration of a smart home power supply connected to the home electronic exceeds a preset threshold; and
if the turning-on duration exceeds the threshold, sending a control instruction to the smart router to control the smart home power supply to perform a turning-off operation.

In the present embodiment, optionally, the obtaining of control information set for a home electronic by a user includes:
providing the information on the home electronics to the user, and receiving control information set for a home electronic by the user; or
analyzing the information on the home electronics to generate the control information.

In the present embodiment, optionally, the information on the home electronics includes identification information of the home electronics, or includes both the identification information and property information of the home electronics, wherein the property information is displayed when being viewed by the user.

In the above method provided by the present embodiment, after successful automatic matching of a smart router with a plurality of smart home power supplies, addresses assigned for the smart home power supplies by the smart router are obtained, and information on a plurality of home electronics connected to the smart home power supplies are obtained; a correspondence between the information on the home electronics and the addresses of the smart home power supplies is established; control information set for a home electronic by a user is obtained, an address of a smart home power supply connected to the home electronic is searched from the correspondence, and a control instruction is sent to the smart router according to the control information and the address of the smart home power supply to control the smart home power supply to perform a corresponding operation. Thus, a smart control on the smart home power supplies is realized to greatly facilitate user's operations and usage. Consequently, purposes such as energy-saving, safety and convenience to life are achieved and optimized usage and management of home electronics are realized.

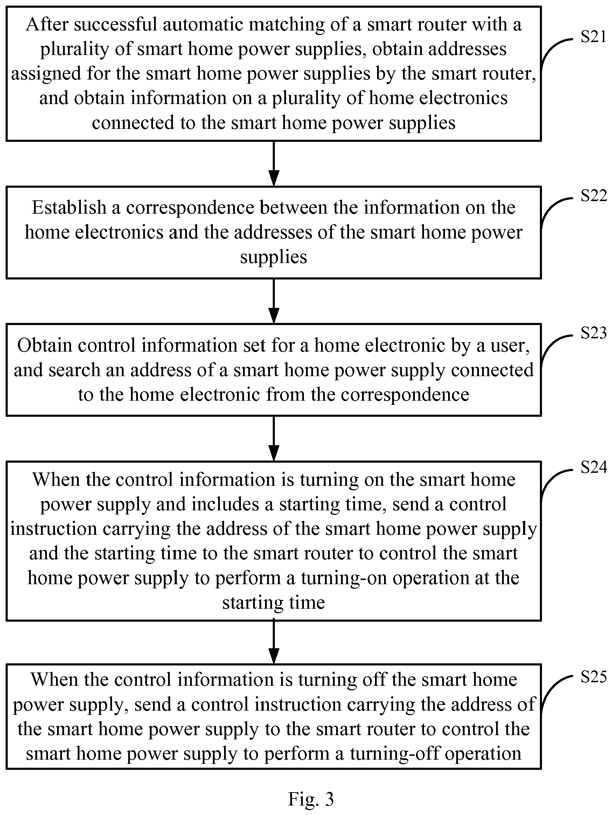

Fig. 3 is a flowchart showing a method for controlling a smart home power supply according to another exemplary embodiment. As shown in Fig. 3, the method is applied in a terminal and includes the following steps.

In step S21, after successful automatic matching of a smart router with a plurality of smart home power supplies, addresses assigned for the smart home power supplies by the smart router are obtained, and information on a plurality of home electronics connected to the smart home power supplies is obtained.

In the present embodiment, optionally, the information on the home electronics includes identification information of the home electronics, or includes both the identification information and property information of the home electronics. The property information is displayed when being viewed by a user. The property information includes but is not limited to rated power of the home electronics, power consumption when the home electronics are in a standby state, the time when the home electronics are firstly used, life spans, expiration dates or the time for performing quality check, and the like. The property information is convenient for user's view and may facilitate the user to know the degree of aging and power consumption of the home electronics.

In step S22, a correspondence between the information on the home electronics and the addresses of the smart home power supplies is established.

In step S23, control information set for a home electronic by a user is obtained, an address of a smart home power supply connected to the home electronic is searched from the correspondence.

The obtaining of control information set for a home electronic by a user includes:
providing the information on the home electronics to the user, and receiving control information set for a home electronic by the user; or
analyzing the information on the home electronics to generate the control information.

In step S24, when the control information is turning on the smart home power supply and includes a starting time, a control instruction carrying the address of the smart home power supply and the starting time is sent to the smart router to control the smart home power supply to perform a turning-on operation at the starting time.

The control information may be set on an interface of the terminal by a user. For example, a dialog box may be popped up to ask whether the user wants to perform setting and to provide options to the user. Or, a window for edition may be provided to the user for editing control information, and the like. The user may set the usage time and usage states of respective home electronics according to his/her own preferences, and the present embodiment does not impose specific limitations on this. The control information at least includes operation types of smart home power supplies, for example, on or off. Optionally, the control information may further include one of more of a starting time, a lasting time or an ending time.

Optionally, this step may include the following steps:
when the control information is turning on the smart home power supply and includes the starting time and the lasting time, sending a control instruction carrying the address of the smart home power supply, the starting time and the lasting time to the smart router to control the smart home power supply to perform a turning-on operation at the starting time and to perform a turning-off operation when a turning-on duration reaches the lasting time.

For example, the user sets the starting time of a rice cooker as 5:00, a.m., or the user sets the starting time of a washing machine as 15:00, and the lasting time as 1.5 hours, and the like.

In step S25, when the control information is turning off the smart home power supply, a control instruction carrying the address of the smart home power supply is sent to the smart router to control the smart home power supply to perform a turning-off operation.

In the present embodiment, after receiving the control instruction, the smart router may directly send a wireless signal to the smart home power supply to control the smart home power supply to turn on or off, and thereby to achieve a smart control purpose.

In the present embodiment, optionally, the above method may further include:
obtaining information on usage habits set for the home electronics by the user;
when the information on usage habits indicates that a home electronic is not frequently used, detecting on a regular interval whether a turning-on duration of a smart home power supply connected to the home electronic exceeds a preset threshold; and
if the turning-on duration exceeds the threshold, sending a control instruction to the smart router to control the smart home power supply to perform a turning-off operation.

In the present embodiment, when a smart home power supply encounters with an abnormality, such as power off during operation, the information on the abnormality may be reported to the smart router in real time, and may be notified by the smart router to the terminal so that the user may view and know such abnormality in time.

In the above method provided by the present embodiment, after successful automatic matching of a smart router with a plurality of smart home power supplies, addresses assigned for the smart home power supplies by the smart router are obtained, and information on a plurality of home electronics connected to the smart home power supplies is obtained. A correspondence between the information on the home electronics and the addresses of the smart home power supplies is established. Control information set for a home electronic by a user is obtained, an address of a smart home power supply connected to the home electronic is searched from the correspondence, and a control instruction is sent to the smart router according to the control information and the address of the smart home power supply to control the smart home power supply to perform a corresponding operation. Thus, a smart control on the smart home power supplies is realized to greatly facilitate user's operations and usage. Consequently, purposes such as energy-saving, safety and convenience to life are achieved and optimized usage and management of home electronics are realized.

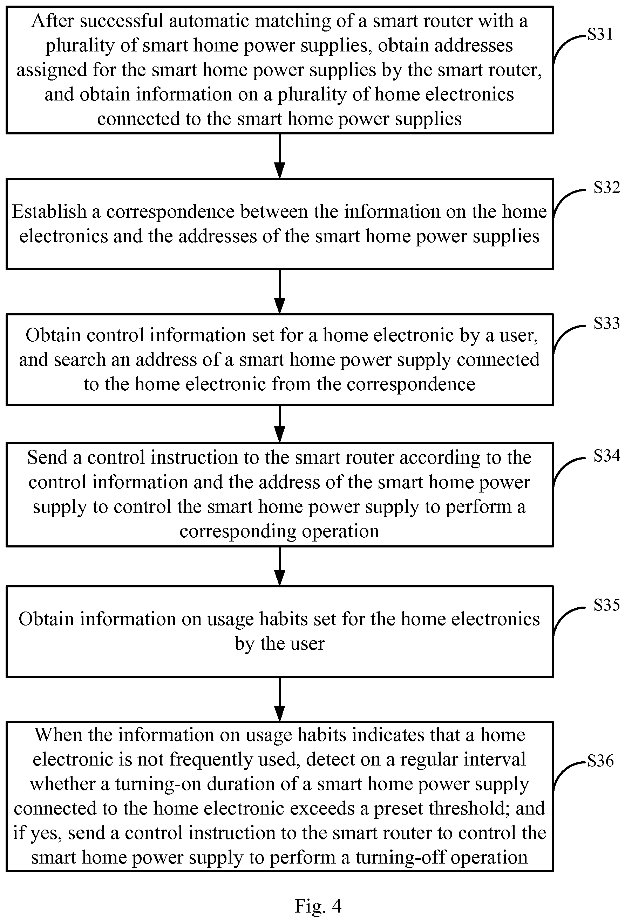

Fig. 4 is a flowchart showing a method for controlling a smart home power supply according to another exemplary embodiment. As shown in Fig. 4, the method is applied in a terminal and includes the following steps.

In step S31, after successful automatic matching of a smart router with a plurality of smart home power supplies, addresses assigned for the smart home power supplies by the smart router are obtained, and information on a plurality of home electronics connected to the smart home power supplies is obtained.

In step S32, a correspondence between the information on the home electronics and the addresses of the smart home power supplies is established.

In step S33, control information set for a home electronic by a user is obtained, an address of a smart home power supply connected to the home electronic is searched from the correspondence.

The obtaining of control information set for a home electronic by a user may include:
providing the information on the home electronics to the user, and receiving control information set for a home electronic by the user; or
analyzing the information on the home electronics to generate the control information.

In step S34, a control instruction is sent to the smart router according to the control information and the address of the smart home power supply to control the smart home power supply to perform a corresponding operation.

Optionally, this step may include:
when the control information is turning on the smart home power supply, sending a control instruction carrying the address of the smart home power supply to the smart router to control the smart home power supply to perform a turning-on operation; or
when the control information is turning off the smart home power supply, sending a control instruction carrying the address of the smart home power supply to the smart router to control the smart home power supply to perform a turning-off operation.

Optionally, when the control information is turning on the smart home power supply, the sending of a control instruction carrying the address of the smart home power supply to the smart router to control the smart home power supply to perform a turning-on operation, includes:
when the control information is turning on the smart home power supply and includes a starting time, sending a control instruction carrying the address of the smart home power supply and the starting time to the smart router to control the smart home power supply to perform a turning-on operation at the starting time; or
when the control information is turning on the smart home power supply and includes the starting time and a lasting time, sending a control instruction carrying the address of the smart home power supply, the starting time and the lasting time to the smart router to control the smart home power supply to perform a turning-on operation at the starting time and to perform a turning-off operation when a turning-on duration reaches the lasting time.

In step S35, information on usage habits set for the home electronics by the user is obtained.

A user may set usage habits for home electronics on a setting interface provided by the terminal. The set information may include "frequently used", "not frequently used", "used every day", and the like, and the present embodiment does not impose specific limitations on this.

In step S36, when the information on usage habits indicates that a home electronic is not frequently used, whether a turning-on duration of a smart home power supply connected to the home electronic exceeds a preset threshold is detected on a regular interval. If the turning-on duration exceeds the threshold, a control instruction is sent to the smart router to control the smart home power supply to perform a turning-off operation.

When a home electronic is not used frequently, a user may usually forget to turn off the power supply. Thus, situations such as current leakage or power waste may occur. By regularly detecting and turning off the smart home power supply, it may prevent these situations from happening and thereby to effectively save power. As a result, a purpose for managing smart home power supplies in real time is achieved, energy saving and home security are realized, and thereby user's usage is greatly facilitated and user's experience is improved.

Optionally, when the smart router determines that the turning-on duration of a home electronic exceeds a preset threshold, the smart router may issue warning information including but not limited to voice warning or light flashing warning, and the like, the warning information may be issued by the smart router or may be notified to the terminal by the smart router, and then warning information may be issued by the terminal to notify the user. The preset threshold may be set according to actual requirements and is not limited to specific value, for example, may be set as 5 hours, 8 hours, 10 hours and the like.

In the present embodiment, when there are a relatively large number of home electronics in a home, a user may set information on usage habits for each of the home electronics or for a part of the home electronics according to actual requirements, and the present embodiment does not impose specific limitations on this.

In the present embodiment, optionally, the information on the home electronics includes identification information of the home electronics, or includes both the identification information and property information of the home electronics, wherein the property information is displayed when being viewed by the user.

In the above method provided by the present embodiment, after successful automatic matching of a smart router with a plurality of smart home power supplies, addresses assigned for the smart home power supplies by the smart router are obtained, and information on a plurality of home electronics connected to the smart home power supplies are obtained. A correspondence between the information on the home electronics and the addresses of the smart home power supplies is established. Control information set for a home electronic by a user is obtained, an address of a smart home power supply connected to the home electronic is searched from the correspondence, and a control instruction is sent to the smart router according to the control information and the address of the smart home power supply to control the smart home power supply to perform a corresponding operation. Thus, a smart control on the smart home power supplies is realized to greatly facilitate user's operations and usage. Consequently, purposes such as energy-saving, safety and convenience to life are achieved and optimized usage and management of home electronics are realized. For example, if some home electronics which are not used frequently are in an operation state and a user cannot turn off these home electronics in time, remote operations may be performed by a terminal to realize a smart management on the smart home power supplies.

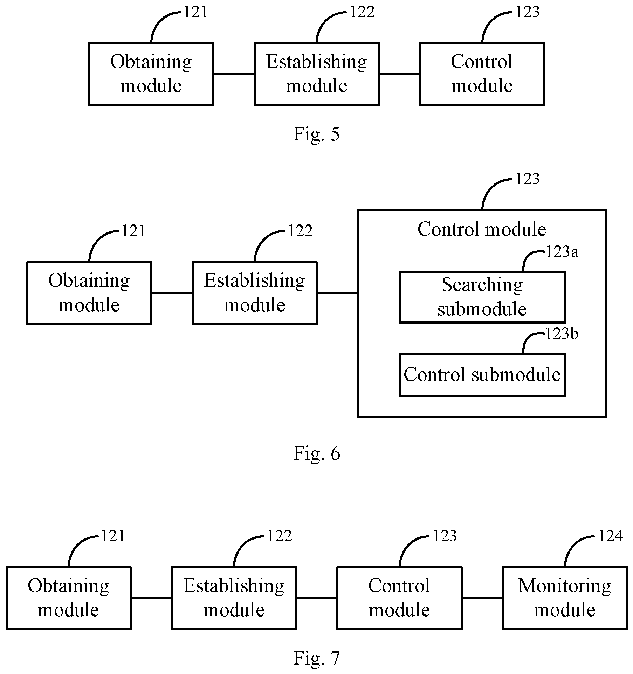

Fig. 5 is a block diagram showing a device for controlling a smart home power supply according to another exemplary embodiment. Referring to Fig. 5, the device includes an obtaining module 121, an establishing module 122 and a control module 123.

The obtaining module 121 is configured to, after successful automatic matching of a smart router with a plurality of smart home power supplies, obtain addresses assigned for the smart home power supplies by the smart router, and obtain information on a plurality of home electronics connected to the smart home power supplies.

The establishing module 122 is configured to establish a correspondence between the information on the home electronics and the addresses of the smart home power supplies.

The control module 123 is configured to obtain control information set for a home electronic by a user, search an address of a smart home power supply connected to the home electronic from the correspondence, and send a control instruction to the smart router according to the control information and the address of the smart home power supply to control the smart home power supply to perform a corresponding operation.

In the present embodiment, optionally, the obtaining module 121 may be a Bluetooth module capable of sending and receiving instructions via a Bluetooth manner to communicate with the smart router. The establishing module 122 and the control module 123 may be implemented by microprocessors which are responsible for data processing to realize the functions of the two modules.

Referring to Fig. 6, optionally, the control module 123 may include:
a searching submodule 123a configured to obtain control information set for a home electronic by a user and search an address of a smart home power supply connected to the home electronic from the correspondence; and
a control submodule 123b configured to, when the control information is turning on the smart home power supply, send a control instruction carrying the address of the smart home power supply to the smart router to control the smart home power supply to perform a turning-on operation; or when the control information is turning off the smart home power supply, send a control instruction carrying the address of the smart home power supply to the smart router to control the smart home power supply to perform a turning-off operation.

In the present embodiment, optionally, the control submodule 123b is configured to:
when the control information is turning on the smart home power supply and includes a starting time, send a control instruction carrying the address of the smart home power supply and the starting time to the smart router to control the smart home power supply to perform a turning-on operation at the starting time.

In the present embodiment, optionally, the control submodule 123b is configured to:
when the control information is turning on the smart home power supply and includes the starting time and a lasting time, send a control instruction carrying the address of the smart home power supply, the starting time and the lasting time to the smart router to control the smart home power supply to perform a turning-on operation at the starting time and to perform a turning-off operation when a turning-on duration reaches the lasting time.

Referring to Fig. 7, in the present embodiment, optionally, the obtaining module 121 is further configured to obtain information on usage habits set for the home electronics by the user.

The device further includes:
a monitoring module 124 configured to, when the information on usage habits indicates that a home electronic is not frequently used, detect on a regular interval whether a turning-on duration of a smart home power supply connected to the home electronic exceeds a preset threshold; and if the turning-on duration exceeds the threshold, send a control instruction to the smart router to control the smart home power supply to perform a turning-off operation.

In the present embodiment, optionally, the control module 123 may be configured to:
provide the information on the home electronics to the user, and receive control information set for a home electronic by the user; or
analyze the information on the home electronics to generate the control information.

In the present embodiment, optionally, the information on the home electronics includes identification information of the home electronics, or includes both the identification information and property information of the home electronics, wherein the property information is displayed when being viewed by the user.

The specific manners for respective modules performing functions in the above devices of the embodiments have been described in the embodiments relating to the methods, and a duplicate description is omitted herein.

In the above device provided by the present embodiment, after successful automatic matching of a smart router with a plurality of smart home power supplies, addresses assigned for the smart home power supplies by the smart router are obtained, and information on a plurality of home electronics connected to the smart home power supplies are obtained. A correspondence between the information on the home electronics and the addresses of the smart home power supplies is established. Control information set for a home electronic by a user is obtained, an address of a smart home power supply connected to the home electronic is searched from the correspondence, and a control instruction is sent to the smart router according to the control information and the address of the smart home power supply to control the smart home power supply to perform a corresponding operation. Thus, a smart control on the smart home power supplies is realized to greatly facilitate user's operations and usage. Consequently, purposes such as energy-saving, safety and convenience to life are achieved and optimized usage and management of home electronics are realized.

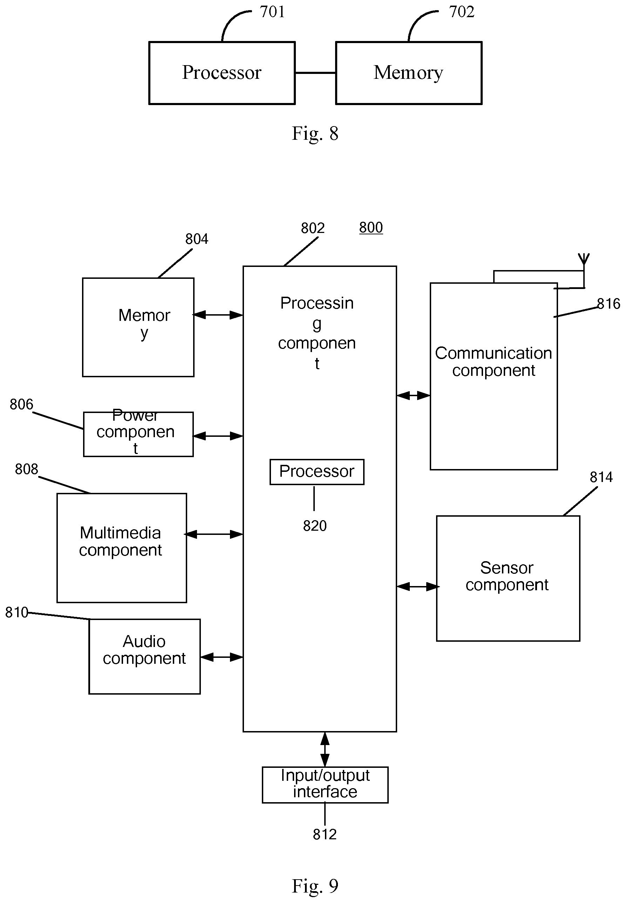

Fig. 8 is a block diagram of a device for controlling a smart home power supply according to another exemplary embodiment. Referring to Fig. 8, the device includes a processor 701 and a memory 702 for storing instructions executable by the processor.

The processor 701 is configured to perform:
after successful automatic matching of a smart router with a plurality of smart home power supplies, obtaining addresses assigned for the smart home power supplies by the smart router, and obtaining information on a plurality of home electronics connected to the smart home power supplies;
establishing a correspondence between the information on the home electronics and the addresses of the smart home power supplies; and
obtaining control information set for a home electronic by a user, searching an address of a smart home power supply connected to the home electronic from the correspondence, and sending a control instruction to the smart router according to the control information and the address of the smart home power supply to control the smart home power supply to perform a corresponding operation.

Fig. 9 is a block diagram showing a device 800 for controlling a smart home power supply according to another exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 9, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods provided by any one of the above embodiments. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods provided by any one of the above embodiments.

In exemplary embodiments, there is also provided a non-transitory computer-readable storage medium including instructions, such as included in the memory 804, executable by the processor 820 in the device 800, for performing the above-described methods provided by any one of the above embodiments. For example, the non-transitory computer-readable storage medium may be a ROM, a RAM, a CD-ROM, a magnetic tape, a floppy disc, an optical data storage device, and the like.

There is also provided a non-transitory computer-readable storage medium. When instructions in the storage medium are executed by a processor of a mobile terminal, the mobile terminal may be caused to perform any one of the above methods.

In the non-transitory computer-readable storage medium provided by the present embodiment, after successful automatic matching of a smart router with a plurality of smart home power supplies, addresses assigned for the smart home power supplies by the smart router are obtained, and information on a plurality of home electronics connected to the smart home power supplies are obtained. A correspondence between the information on the home electronics and the addresses of the smart home power supplies is established. Control information set for a home electronic by a user is obtained, an address of a smart home power supply connected to the home electronic is searched from the correspondence, and a control instruction is sent to the smart router according to the control information and the address of the smart home power supply to control the smart home power supply to perform a corresponding operation. Thus, a smart control on the smart home power supplies is realized to greatly facilitate user's operations and usage. Consequently, purposes such as energy-saving, safety and convenience to life are achieved and optimized usage and management of home electronics are realized.

Where functional modules are referred to for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and embodiments be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling a smart home power supply, the method comprising:
after successful automatic matching of a smart router with a plurality of smart home power supplies, obtaining (S11, S21, S31) addresses assigned to the smart home power supplies by the smart router, and obtaining information on a plurality of home electronic devices connected to the smart home power supplies;
establishing (S12, S22, S32) a correspondence between the information on the home electronic devices and the addresses of the smart home power supplies;
obtaining (S13, S23, S33) a control information set of a home electronic device of the home electronic devices by a user, searching an address of a smart home power supply connected to the home electronic device of the home electronic devices from the correspondence, and sending a control instruction to the smart router according to the control information and the address of the smart home power supply to control the smart home power supply to perform a corresponding operation, **characterized in that** the method further comprises
obtaining (S35) information on usage habits set for the home electronic devices by the user;
when the information on usage habits indicates that a home electronic device is not frequently used, detecting (S36) on a regular interval whether a turning-on duration of a smart home power supply connected to the home electronic device exceeds a preset threshold; and
if the turning-on duration exceeds the threshold, sending a control instruction to the smart router to control the smart home power supply to perform a turning-off operation.

2. The method according to claim 1, **characterized in that**, the sending (S13) of a control instruction to the smart router according to the control information and the address of the smart home power supply to control the smart home power supply to perform a corresponding operation, comprises:
when the control information is turning on the smart home power supply, sending (S24) a control instruction carrying the address of the smart home power supply to the smart router to control the smart home power supply to perform a turning-on operation; or
when the control information is turning off the smart home power supply, sending (S25) a control instruction carrying the address of the smart home power supply to the smart router to control the smart home power supply to perform a turning-off operation.

3. The method according to claim 2, **characterized in that**, when the control information is turning on the smart home power supply, the sending (S24) of a control instruction carrying the address of the smart home power supply to the smart router to control the smart home power supply to perform a turning-on operation, comprises:
when the control information is turning on the smart home power supply and comprises a starting time, sending a control instruction carrying the address of the smart home power supply and the starting time to the smart router to control the smart home power supply to perform a turning-on operation at the starting time.

4. The method according to claim 3, **characterized in that**, when the control information is turning on the smart home power supply and comprises a starting time, the sending (S24) of a control instruction carrying the address of the smart home power supply and the starting time to the smart router to control the smart home power supply to perform a turning-on operation at the starting time, comprises:
when the control information is turning on the smart home power supply and comprises the starting time and a lasting time, sending a control instruction carrying the address of the smart home power supply, the starting time and the lasting time to the smart router to control the smart home power supply to perform a turning-on operation at the starting time and to perform a turning-off operation when a turning-on duration reaches the lasting time.

5. The method according to any preceding claim, **characterized in that** the obtaining of control information set for a home electronic device by a user comprises:
providing the information on the home electronic devices to the user, and receiving the control information set for a home electronic device by the user; or
analyzing the information on the home electronic device to generate the control information.

6. The method according to any preceding claim, **characterized in that** the information on the home electronic devices comprises identification information of the home electronic devices, or comprises both the identification information and property information of the home electronic devices, wherein the property information is displayed when being viewed by the user.

7. A device for controlling a smart home power supply, the device comprises:
an obtaining module (121) configured to, after successful automatic matching of a smart router with a plurality of smart home power supplies, obtain addresses assigned for the smart home power supplies by the smart router, obtain information on a plurality of home electronic devices connected to the smart home power supplies, and obtain information on usage habits set for the home electronic devices by the user;
an establishing module (122) configured to establish a correspondence between the information on the home electronic devices and the addresses of the smart home power supplies **characterized in that** the device further comprises
a control module (123) configured to obtain control information set for a home electronic device of the electronic devices by a user, search an address of a smart home power supply connected to the home electronic device from the correspondence, and send a control instruction to the smart router according to the control information and the address of the smart home power supply to control the smart home power supply to perform a corresponding operation; and
a monitoring module (124) configured to, when the information on usage habits indicates that a home electronic device is not frequently used, detect on a regular interval whether a turning-on duration of a smart home power supply connected to the home electronic device exceeds a preset threshold; and if the turning-on duration exceeds the threshold, send a control instruction to the smart router to control the smart home power supply to perform a turning-off operation.

8. The device according to claim 7, **characterized in that** the control module (123) comprises:
a searching submodule (123a) configured to obtain control information set for a home electronic device by a user and search an address of a smart home power supply connected to the home electronic device from the correspondence; and
a control submodule (123b) configured to, when the control information is turning on the smart home power supply, send a control instruction carrying the address of the smart home power supply to the smart router to control the smart home power supply to perform a turning-on operation; or when the control information is turning off the smart home power supply, send a control instruction carrying the address of the smart home power supply to the smart router to control the smart home power supply to perform a turning-off operation.

9. The device according to claim 8, **characterized in that** the control submodule (123) is configured to:
when the control information is turning on the smart home power supply and comprises a starting time, send a control instruction carrying the address of the smart home power supply and the starting time to the smart router to control the smart home power supply to perform a turning-on operation at the starting time.

10. The device according to claim 9, **characterized in that** the control submodule (123) is configured to:
when the control information is turning on the smart home power supply and comprises the starting time and a lasting time, send a control instruction carrying the address of the smart home power supply, the starting time and the lasting time to the smart router to control the smart home power supply to perform a turning-on operation at the starting time and to perform a turning-off operation when a turning-on duration reaches the lasting time.

11. The device according to any of claims 7 to 10, **characterized in that** the control module (123) is configured to:
provide the information on the home electronic devices to the user, and receive control information set for a home electronic device by the user; or
analyze the information on the home electronic devices to generate the control information.

12. The device according to any of claims 7 to 11, **characterized in that** the information on the home electronics comprises identification information of the home electronics, or comprises both the identification information and property information of the home electronics, wherein the property information is displayed when being viewed by the user.

13. A computer program, which when executing on a processor of a device, performs the method according to any of claims 1 to 6.

## Patentansprüche

1. Verfahren zum Steuern einer intelligenten Haushaltsstromversorgung, wobei das Verfahren Folgendes aufweist:
nach erfolgreicher automatischer Abstimmung eines intelligenten Routers mit mehreren intelligenten Haushaltsstromversorgungen Beschaffen (S11, S21, S31) von den intelligenten Haushaltsstromversorgungen durch den intelligenten Router zugewiesenen Adressen und Beschaffen von Informationen über mehrere elektronische Geräte im Haushalt, die mit den intelligenten Haushaltsstromversorgungen verbunden sind;
Herstellen (S12, S22, S32) einer Entsprechung zwischen den Informationen über die elektronischen Geräte im Haushalt und den Adressen der intelligenten Haushaltsstromversorgungen;
Beschaffen (S13, S23, S33) von für ein elektronisches Gerät im Haushalt der elektronischen Geräte im Haushalt durch einen Benutzer festgelegten Steuerungsinformationen, Heraussuchen einer Adresse einer mit dem elektronischen Gerät im Haushalt der elektronischen Geräte im Haushalt verbundenen intelligenten Haushaltsstromversorgung aus der Entsprechung und Senden einer Steueranweisung an den intelligenten Router gemäß den Steuerungsinformationen und der Adresse der intelligenten Haushaltsstromversorgung zum Steuern der intelligenten Haushaltsstromversorgung zum Durchführen eines entsprechenden Vorgangs, **dadurch gekennzeichnet, dass** das Verfahren ferner Folgendes aufweist:
Beschaffen (S35) von Informationen über vom Benutzer für die elektronischen Geräte im Haushalt festgelegte Nutzungsgewohnheiten;
wenn die Informationen über Nutzungsgewohnheiten anzeigen, dass ein elektronisches Gerät im Haushalt nicht häufig verwendet wird, in regelmäßigen Abständen Detektieren (S36), ob eine Einschaltdauer einer mit dem elektronischen Gerät im Haushalt verbundenen intelligenten Haushaltsstromversorgung eine vorgegebene Schwelle überschreitet; und,
falls die Einschaltdauer die Schwelle überschreitet, Senden einer Steueranweisung an den intelligenten Router zum Steuern der intelligenten Haushaltsstromversorgung zum Durchführen eines Ausschaltvorgangs.

2. Verfahren nach Anspruch 1, **dadurch gekennzeichnet, dass** das Senden (S13) einer Steueranweisung an den intelligenten Router gemäß den Steuerinformationen und der Adresse der intelligenten Haushaltsstromversorgung zum Steuern der intelligenten Haushaltsstromversorgung zum Durchführen eines entsprechenden Vorgangs Folgendes aufweist:
wenn die Steuerungsinformationen die intelligente Haushaltsstromversorgung einschalten, Senden (S24) einer Steueranweisung, die die Adresse der intelligenten Haushaltsstromversorgung trägt, an den intelligenten Router zum Steuern der intelligenten Haushaltsstromversorgung zum Durchführen eines Einschaltvorgangs; oder,
wenn die Steuerungsinformationen die intelligente Haushaltsstromversorgung ausschalten, Senden (S25) einer Steueranweisung, die die Adresse der intelligenten Haushaltsstromversorgung trägt, an den intelligenten Router zum Steuern der intelligenten Haushaltsstromversorgung zum Durchführen eines Ausschaltvorgangs.

3. Verfahren nach Anspruch 2, **dadurch gekennzeichnet, dass**, wenn die Steuerungsinformationen die intelligente Haushaltsstromversorgung einschalten, das Senden (S24) einer Steueranweisung, die die Adresse der intelligenten Haushaltsstromversorgung trägt, an den intelligenten Router zum Steuern der intelligenten Haushaltsstromversorgung zum Durchführen eines Einschaltvorgangs Folgendes aufweist:
wenn die Steuerungsinformationen die intelligente Haushaltsstromversorgung einschalten und eine Startzeit aufweisen, Senden einer Steueranweisung, die die Adresse der intelligenten Haushaltsstromversorgung trägt, und der Startzeit an den intelligenten Router zum Steuern der intelligenten Haushaltsstromversorgung zum Durchführen eines Einschaltvorgangs zur Startzeit.

4. Verfahren nach Anspruch 3, **dadurch gekennzeichnet, dass**, wenn die Steuerungsinformationen die intelligente Haushaltsstromversorgung einschalten und eine Startzeit aufweisen, das Senden (S24) einer Steueranweisung, die die Adresse der intelligenten Haushaltsstromversorgung trägt, und der Startzeit an den intelligenten Router zum Steuern der intelligenten Haushaltsstromversorgung zum Durchführen eines Einschaltvorgangs zur Startzeit Folgendes aufweist:
wenn die Steuerungsinformationen die intelligente Haushaltsstromversorgung einschalten und die Startzeit und eine Laufzeit aufweisen, Senden einer Steueranweisung, die die Adresse der intelligenten Haushaltsstromversorgung trägt, der Startzeit und der Laufzeit an den intelligenten Router zum Steuern der intelligenten Haushaltsstromversorgung zum Durchführen eines Einschaltvorgangs zur Startzeit und zum Durchführen eines Ausschaltvorgangs, wenn eine Einschaltdauer die Laufzeit erreicht.

5. Verfahren nach einem der vorhergehenden Ansprüche, **dadurch gekennzeichnet, dass** das Beschaffen von für ein elektronisches Gerät im Haushalt durch einen Benutzer festgelegten Steuerungsinformationen Folgendes aufweist:
dem Benutzer Bereitstellen der Informationen über die elektronischen Geräte im Haushalt und Empfangen der durch den Benutzer für ein elektronisches Gerät im Haushalt festgelegten Steuerungsinformationen oder
Analysieren der Informationen über das elektronische Gerät im Haushalt zum Erzeugen der Steuerungsinformationen.

6. Verfahren nach einem der vorhergehenden Ansprüche, **dadurch gekennzeichnet, dass** die Informationen über die elektronischen Geräte im Haushalt Kennungsinformationen der elektronischen Geräte im Haushalt aufweisen oder sowohl die Kennungsinformationen als auch Eigenschaftsinformationen der elektronischen Geräte im Haushalt aufweisen, wobei die Eigenschaftsinformationen beim Betrachten durch den Benutzer angezeigt werden.

7. Vorrichtung zum Steuern einer intelligenten Haushaltsstromversorgung, wobei die Vorrichtung Folgendes aufweist:
ein Beschaffungsmodul (121), das zum Beschaffen, nach erfolgreicher automatischer Abstimmung eines intelligenten Routers mit mehreren intelligenten Haushaltsstromversorgungen, von den intelligenten Haushaltsstromversorgungen durch den intelligenten Router zugewiesenen Adressen, Beschaffen von Informationen über mehrere elektronische Geräte im Haushalt, die mit den intelligenten Haushaltsstromversorgungen verbunden sind, und Beschaffen von Informationen über vom Benutzer für die elektronischen Geräte im Haushalt festgelegte Nutzungsgewohnheiten konfiguriert ist;
ein Herstellungsmodul (122), das zum Herstellen einer Entsprechung zwischen den Informationen über die elektronischen Geräte im Haushalt und den Adressen der intelligenten Haushaltsstromversorgungen konfiguriert ist, **dadurch gekennzeichnet, dass** die Vorrichtung ferner Folgendes aufweist:
ein Steuermodul (123), das zum Beschaffen von für ein elektronisches Gerät im Haushalt der elektronischen Geräte durch einen Benutzer festgelegten Steuerungsinformationen, Heraussuchen einer Adresse einer mit dem elektronischen Gerät im Haushalt verbundenen intelligenten Haushaltsstromversorgung aus der Entsprechung und Senden einer Steueranweisung an den intelligenten Router gemäß den Steuerungsinformationen und der Adresse der intelligenten Haushaltsstromversorgung zum Steuern der intelligenten Haushaltsstromversorgung zum Durchführen eines entsprechenden Vorgangs konfiguriert ist; und
ein Überwachungsmodul (124), das konfiguriert ist zum:
wenn die Informationen über Nutzungsgewohnheiten anzeigen,
dass ein elektronisches Gerät im Haushalt nicht häufig verwendet wird, Detektieren in regelmäßigen Abständen, ob eine Einschaltdauer einer mit dem elektronischen Gerät im Haushalt verbundenen intelligenten Haushaltsstromversorgung eine vorgegebene Schwelle überschreitet; und, falls die Einschaltdauer die Schwelle überschreitet, Senden einer Steueranweisung an den intelligenten Router zum Steuern der intelligenten Haushaltsstromversorgung zum Durchführen eines Ausschaltvorgangs.

8. Vorrichtung nach Anspruch 7, **dadurch gekennzeichnet, dass** das Steuermodul (123) Folgendes aufweist:
ein Suchuntermodul (123a), das zum Beschaffen von für ein elektronisches Gerät im Haushalt durch einen Benutzer festgelegten Steuerungsinformationen und zum Heraussuchen einer Adresse einer mit dem elektronischen Gerät im Haushalt verbundenen intelligenten Haushaltsstromversorgung aus der Entsprechung konfiguriert ist; und
ein Steueruntermodul (123b), das konfiguriert ist zum:
wenn die Steuerungsinformationen die intelligente Haushaltsstromversorgung einschalten, Senden einer Steueranweisung, die die Adresse der intelligenten Haushaltsstromversorgung trägt, an den intelligenten Router zum Steuern der intelligenten Haushaltsstromversorgung zum Durchführen eines Einschaltvorgangs; oder, wenn die Steuerungsinformationen die intelligente Haushaltsstromversorgung ausschalten, Senden einer Steueranweisung, die die Adresse der intelligenten Haushaltsstromversorgung trägt, an den intelligenten Router zum Steuern der intelligenten Haushaltsstromversorgung zum Durchführen eines Ausschaltvorgangs.

9. Vorrichtung nach Anspruch 8, **dadurch gekennzeichnet, dass** das Steueruntermodul (123) konfiguriert ist zum:
wenn die Steuerungsinformationen die intelligente Haushaltsstromversorgung einschalten und eine Startzeit aufweisen, Senden einer Steueranweisung, die die Adresse der intelligenten Haushaltsstromversorgung trägt, und der Startzeit an den intelligenten Router zum Steuern der intelligenten Haushaltsstromversorgung zum Durchführen eines Einschaltvorgangs zur Startzeit.

10. Vorrichtung nach Anspruch 9, **dadurch gekennzeichnet, dass** das Steueruntermodul (123) konfiguriert ist zum:
wenn die Steuerungsinformationen die intelligente Haushaltsstromversorgung einschalten und die Startzeit und eine Laufzeit aufweisen, Senden einer Steueranweisung, die die Adresse der intelligenten Haushaltsstromversorgung trägt, der Startzeit und der Laufzeit an den intelligenten Router zum Steuern der intelligenten Haushaltsstromversorgung zum Durchführen eines Einschaltvorgangs zur Startzeit und zum Durchführen eines Ausschaltvorgangs, wenn eine Einschaltdauer die Laufzeit erreicht.

11. Vorrichtung nach einem der Ansprüche 7 bis 10, **dadurch gekennzeichnet, dass** das Steuermodul (123) konfiguriert ist zum:
dem Benutzer Bereitstellen der Informationen über die elektronischen Geräte im Haushalt und Empfangen von durch den Benutzer für ein elektronisches Gerät im Haushalt festgelegten Steuerungsinformationen oder
Analysieren der Informationen über das elektronische Gerät im Haushalt zum Erzeugen der Steuerungsinformationen.

12. Vorrichtung nach einem der Ansprüche 7 bis 11, **dadurch gekennzeichnet, dass** die Informationen über die Elektronik im Haushalt Kennungsinformationen der Elektronik im Haushalt aufweisen oder sowohl die Kennungsinformationen als auch Eigenschaftsinformationen der Elektronik im Haushalt aufweisen, wobei die Eigenschaftsinformationen beim Betrachten durch den Benutzer angezeigt werden.

13. Computerprogramm, das bei Ausführung in einem Prozessor einer Vorrichtung das Verfahren nach einem der Ansprüche 1 bis 6 durchführt.

## Revendications

1. Procédé de commande d'une alimentation électrique domestique intelligente, le procédé comprenant :
après la mise en correspondance automatique réussie d'un routeur intelligent avec une pluralité d'alimentations électriques domestiques intelligentes, l'obtention (S11, S21, S31) d'adresses assignées aux alimentations électriques domestiques intelligentes par le routeur intelligent, et l'obtention d'informations sur une pluralité de dispositifs électroniques domestiques connectés aux alimentations électriques domestiques intelligentes ;
l'établissement (S12, S22, S32) d'une correspondance entre les informations sur les dispositifs électroniques domestiques et les adresses des alimentations électriques domestiques intelligentes ;
l'obtention (S13, S23, S33) d'informations de commande d'un dispositif électronique domestique des dispositifs électroniques domestiques définies par un utilisateur, la recherche d'une adresse d'une alimentation électrique domestique intelligente connectée au dispositif électronique domestique des dispositifs électroniques domestiques à partir de la correspondance, et l'envoi d'une instruction de commande au routeur intelligent conformément aux informations de commande et à l'adresse de l'alimentation électrique domestique intelligente pour commander l'alimentation électrique domestique intelligente afin d'effectuer une opération correspondante, **caractérisé en ce que** le procédé comprend en outre :
l'obtention (S35) d'informations sur des habitudes d'utilisation des dispositifs électroniques domestiques définies par l'utilisateur ;
quand les informations sur les habitudes d'utilisation indiquent qu'un dispositif électronique domestique n'est pas souvent utilisé, la détection (S36) à intervalles réguliers qu'une durée de mise en marche d'une alimentation électrique domestique intelligente connectée au dispositif électronique domestique dépasse ou non une limite prédéfinie ; et
si la durée de mise en marche dépasse la limite, l'envoi d'une instruction de commande au routeur intelligent pour commander l'alimentation électrique domestique intelligente afin d'exécuter une opération d'arrêt.

2. Procédé selon la revendication 1, **caractérisé en ce que**, l'envoi (S13) d'une instruction de commande au routeur intelligent conformément aux informations de commande et à l'adresse de l'alimentation électrique domestique intelligente pour comander l'alimentation électrique domestique intelligente afin d'exécuter une opération correspondante, comprend :
quand les informations de commande visent à mettre en marche l'alimentation électrique domestique intelligente, l'envoi (S24) d'une instruction de commande portant l'adresse de l'alimentation électrique domestique intelligente au routeur intelligent pour commander l'alimentation électrique domestique intelligente afin d'exécuter une opération de mise en marche ; ou
quand les informations de commande visent à arrêter l'alimentation électrique domestique intelligente, l'envoi (S25) d'une instruction de commande portant l'adresse de l'alimentation électrique domestique intelligente au routeur intelligent pour commander l'alimentation électrique domestique intelligente afin d'exécuter une opération d'arrêt.

3. Procédé selon la revendication 2, **caractérisé en ce que**, quand les informations de commande visent à mettre en marche l'alimentation électrique domestique intelligente, l'envoi (S24) d'une instruction de commande portant l'adresse de l'alimentation électrique domestique intelligente au routeur intelligent pour commander l'alimentation électrique domestique intelligente afin d'exécuter une opération de mise en marche , comprend :
quand les informations de commande visent à mettre en marche l'alimentation électrique domestique intelligente et comprennent une heure de mise en marche, l'envoi d'une instruction de commande portant l'adresse de l'alimentation électrique domestique intelligente et l'heure de mise en marche au routeur intelligent pour commander l'alimentation électrique domestique intelligente afin d'exécuter une opération de mise en marche à l'heure de mise en marche.

4. Procédé selon la revendication 3, **caractérisé en ce que**, quand les informations de commande visent à mettre en marche l'alimentation électrique domestique intelligente et comprennent une heure de mise en marche, l'envoi (S24) d'une instruction de commande portant l'adresse de l'alimentation électrique domestique intelligente et l'heure de mise en marche au routeur intelligent pour commander l'alimentation électrique domestique intelligente afin d'exécuter une opération de mise en marche à l'heure de mise en marche, comprend :
quand les informations de commande visent à mettre en marche l'alimentation électrique domestique intelligente et comprennent l'heure de mise en marche et une durée, l'envoi d'une instruction de commande portant l'adresse de l'alimentation électrique domestique intelligente, l'heure de mise en marche et la durée au routeur intelligent pour commander l'alimentation électrique domestique intelligente afin d'exécuter une opération de mise en marche à l'heure de mise en marche et d'exécuter une opération d'arrêt quand une durée de mise en marche atteint la durée.

5. Procédé selon l'une quelconque des revendications précédentes, **caractérisé en ce que** l'obtention des informations de commande d'un dispositif électronique domestique définies par un utilisateur comprend :
la fourniture des informations sur les dispositifs électroniques domestiques à l'utilisateur, et
la réception des informations de commande d'un dispositif électronique domestique définies par l'utilisateur ; ou
l'analyse des informations sur le dispositif électronique domestique afin de générer les informations de commande.

6. Procédé selon l'une quelconque des revendications précédentes, **caractérisé en ce que** les informations sur les dispositifs électroniques domestiques comprennent des informations d'identification des dispositifs électroniques domestiques, ou comprennent à la fois les informations d'identification et des informations de propriété des dispositifs électroniques domestiques, dans lequel les informations de propriété sont affichées à leur visualisation par l'utilisateur.

7. Dispositif de commande d'une alimentation électrique domestique intelligente, **caractérisé en ce que** le dispositif comprend :
un module d'obtention (121) configuré pour après la mise en correspondance automatique réussie d'un routeur intelligent avec une pluralité d'alimentations électriques domestiques intelligentes, obtenir des adresses assignées aux alimentations électriques domestiques intelligentes par le routeur intelligent, obtenir des informations sur une pluralité de dispositifs électroniques domestiques connectés aux alimentations électriques domestiques intelligentes, et obtenir des informations sur les habitudes d'utilisation des dispositifs électroniques domestiques définies par l'utilisateur ;
un module d'établissement (122) configuré pour établir une correspondance entre les informations sur les dispositifs électroniques domestiques et les adresses des alimentations électriques domestiques intelligentes ; **caractérisé en ce que** le dispositif comprend en outre un module de commande (123) configuré pour obtenir des informations de commande d'un dispositif électronique domestique des dispositifs électroniques domestiques définies par un utilisateur, rechercher une adresse d'une alimentation électrique domestique intelligente connectée au dispositif électronique domestique à partir de la correspondance, et envoye une instruction de commande au routeur intelligent conformément aux informations de commande et à l'adresse de l'alimentation électrique domestique intelligente pour commander l'alimentation électrique domestique intelligente afin d'effectuer une opération correspondante ; et
un module de contrôle (124) configuré pour, quand les informations sur les habitudes d'utilisation indiquent qu'un dispositif électronique domestique n'est pas souvent utilisé, détecter à intervalles réguliers qu'une durée de mise en marche d'une alimentation électrique domestique intelligente connectée au dispositif électronique domestique dépasse ou non une limite prédéfinie ; et si la durée de mise en marche dépasse la limite, envoyer une instruction de commande au routeur intelligent pour commander l'alimentation électrique domestique intelligente afin d'exécuter une opération d'arrêt.

8. Dispositif selon la revendication 7, **caractérisé en ce que** le module de commande (123) comprend :
un sous-module de recherche (123a) configuré pour obtenir des informations de commande d'un dispositif électronique domestique définies par un utilisateur et rechercher une adresse d'une alimentation électrique domestique intelligente connectée au dispositif électronique domestique à partir de la correspondance ; et
un sous-module de commande (123b) configuré pour, quand les informations de commande visent à mettre en marche l'alimentation électrique domestique intelligente, envoyer une instruction de commande portant l'adresse de l'alimentation électrique domestique intelligente au routeur intelligent pour commander l'alimentation électrique domestique intelligente afin d'exécuter une opération de mise en marche ; ou quand les informations de commande visent à arrêter l'alimentation électrique domestique intelligente, envoyer une instruction de commande portant l'adresse de l'alimentation électrique domestique intelligente au routeur intelligent pour commander l'alimentation électrique domestique intelligente afin d'exécuter une opération d'arrêt.

9. Dispositif selon la revendication 8, **caractérisé en ce que** le sous-module de commande (123) est configuré pour :
quand les informations de commande visent à mettre en marche l'alimentation électrique domestique intelligente et comprennent une heure de mise en marche, envoyer une instruction de commande portant l'adresse de l'alimentation électrique domestique intelligente et l'heure de mise en marche au routeur intelligent pour commander l'alimentation électrique domestique intelligente afin d'exécuter une opération de mise en marche à l'heure de mise en marche.

10. Dispositif selon la revendication 9, **caractérisé en ce que** le sous-module de commande (123) est configuré pour :
quand les informations de commande visent à mettre en marche l'alimentation électrique domestique intelligente et comprennent l'heure de mise en marche et une durée, envoyer une instruction de commande portant l'adresse de l'alimentation électrique domestique intelligente, l'heure de mise en marche et la durée au routeur intelligent pour commander l'alimentation électrique domestique intelligente afin d'exécuter une opération de mise en marche à l'heure de mise en marche et d'exécuter une opération d'arrêt quand une durée de mise en marche atteint la durée.

11. Dispositif selon l'une quelconque des revendications 7 à 10, **caractérisé en ce que** le module de commande (123) est configuré pour :
fournir les informations sur les dispositifs électroniques domestiques à l'utilisateur, et recevoir des informations de commande d'un dispositif électronique domestique définies par l'utilisateur ; ou
analyser les informations sur les dispositifs électroniques domestiques pour générer les informations de commande.

12. Dispositif selon l'une quelconque des revendications 7 à 11, **caractérisé en ce que** les informations sur les dispositifs électroniques domestiques comprennent des informations d'identification des dispositifs électroniques domestiques, ou comprennent à la fois les informations d'identification et des informations de propriété des dispositifs électroniques domestiques, dans lequel les informations de propriété sont affichées à leur visualisation par l'utilisateur.

13. Programme informatique, qui, à son exécution sur un processeur d'un dispostif, exécute le procédé selon l'une quelconque des revendications 1 à 6.
